# EUROPÄISCHE PATENTSCHRIFT

(11) **EP 1 001 646 B1**
(45) Veröffentlichungstag und Bekanntmachung des Hinweises auf die Patenterteilung: **10.10.2007**
(21) Anmeldenummer: 99122484.1
(22) Anmeldetag: 11.11.1999
(51) Int. Cl.: H04Q 11/04, H04L 12/56

(54) **Verfahren zur verbindungsindividuellen Bestimmung der aktuell zulässigen Ubertragungsrate von ATM-Zellen**
Method to determine per-connection actual permissible ATM cell transfer rate
Methode permettant de déterminer pour chaque connexion individuelle le débit actuellement admissible de transfert de cellules ATM

(30) Priorität: 13.11.1998 DE 19852427
(43) Veröffentlichungstag der Anmeldung: 17.05.2000
(73) Patentinhaber: SIEMENS AKTIENGESELLSCHAFT, 80333 München (DE)
(72) Erfinder: Heiss, Herbert, Dr., 82008 Unterhaching (DE)

(56) Entgegenhaltungen:
- JP-A- 10 065 694
- "Traffic control and congestion control for B-ISDN: Conformance definitions for ABT and ABR" ITU-T RECOMMENDATION I.371.1, Juni 1997 (1997-06), Seiten 15-18, XP002130830
- "TRAFFIC MANAGEMENT SPECIFICATION VERSION 4.0" ATM FORUM SPECIFICATION AF-TM-0056.000, April 1996 (1996-04), Seiten 92-96, XP002114564

## Beschreibung

In bestehenden und zukünftigen packetorientierten Kommunikationssystemen, insbesondere nach dem Asynchronen Transfer Modus wirkenden ATM-Kommunikationssystemen, werden zur Überwachung von variablen Übertragungsraten von ATM-Zellen von virtuellen Verbindungen - insbesondere bei ABR (Available Bit Rate) - Verbindungen - innerhalb eines ATM-Kommunikationsnetzes unterschiedlichste Überwachungsprozeduren wie beispielsweise der in der ITU I.371.1 beschriebene "Dynamic Generic Cell Rate Algorithm (DGCRA)" verwendet. Mit Hilfe der DGCRA-Überwachungsprozedur lassen sich Überlastsituationen in einer ATM-Kommunikationseinrichtung erkennen und anschließend Maßnahmen zur Behebung derartiger Überlastszenarien einleiten. Um eine effiziente Überwachung der variablen Übertragungsraten bei ABR-Verkehr innerhalb einer ATM-Kommunikationseinrichtung gewährleisten zu können, ist zur Ausführung der DGCRA-Überwachungsprozedur ständig die aktuell zulässige Übertragungsrate - standardgemäß mit "Allowed Cell Rate (ACR)" bezeichnet - erforderlich. Dabei ist unter der aktuell zulässigen Übertragungsrate von ATM-Zellen die zur Zeit von der Überwachungsprozedur zu überwachende Übertragungsrate zu verstehen.

Zusätzlich werden mit Hilfe von periodisch von einer Sendeeinrichtung in einer ersten Übermittlungsrichtung in den Zellenstrom eingefügten Steuerzellen, standardgemäß als Resource-Management-Zellen (RM) bezeichnet, verbindungsbezogene Daten sowie den aktuellen Zustand der Verbindungsabschnitte beschreibende Daten der Empfangseinrichtung über die in einerzweiten, entgegengesetzt zur ersten Übermittlungsrichtung übertragenen Resource-Management-Zellen übermittelt. Unter anderem wird dabei nach der Ankunft einer in einer zweiten Übermittlungsrichtung übermittelten Resource-Management-Zelle in einer ATM-Kommunikationseinrichtung überprüft, ob die in der Resource-Management-Zelle eingetragene, explizite Übertragungsrate von dieser ATM-Kommunikationseinrichtung für die bestehende virtuelle Verbindung zur Verfügung gestellt werden kann. Weiterhin wird überprüft, ob eine Anpassung der expliziten Übertragungsrate zur Vermeidung eines Datenstaus in der ATM-Kommunikationseinrichtung erforderlich ist. Ist dies der Fall, so wird die aus der Resource-Management-Zelle gelesene explizite Übertragungsrate durch die von der ATM-Kommunikationseinrichtung übermittelbaren Übertragungsrate ersetzt. Somit ist sichergestellt, daß der Empfangseinrichtung die explizite Übertragungsrate durch die Resource-Management-Zelle angezeigt wird, mit der, ohne einen Verkehrsstau zu verursachen, Daten ausgesandt werden können.

Zur Bestimmung der aktuell zulässigen Übertragungsrate werden von der International Telecommunication Union (ITU) im Vorschlag I.371.1 "Traffic control and congestion control in B-ISDN:Conformance definitions for ABT and ABR" unter anderem zwei verbindungsindividuelle Verzögerungszeiten definiert, mit deren Hilfe der Zeitpunkt einer Übertragungsratenerhöhung bzw. -erniedrigung in Bezug auf die aktuell zulässige Übertragungsrate von ATM-Zellen einer virtuellen Verbindung berechnet wird. Desweiteren wird ein Verfahren zur Bestimmung der aktuell zulässigen Übertragungsrate von ATM-Zellen mit Hilfe von drei zwischengespeicherten Übertragungraten und den zugehörigen zeitlichen Änderungsinformationen erläutert. Bei Anwendung dieses Verfahrens werden ausgehend von der aus einer ankommenden Resource-Management-Zelle gelesenen, expliziten Übertragungsrate von ATM-Zellen sowohl die aktuell zulässige Übertragungsrate als auch die zugehörige zeitliche Anderungsinformation für die Überwachung dieser Übertragungsrate ermittelt. Dabei wird mit Hilfe von Zählern die aktuell zulässige Übertragungsrate an die geänderte Übertragungsrate angepaßt, wobei verbindungsindividuell zwei Zähler zur Bestimmung einer ersten und einer zweiten zeitlichen Anderungsinformation erforderlich sind. Beim Ablauf des eine erste zeitliche Änderungsinformation repräsentierenden Zählers wird mit Hilfe einer Anpassungsroutine die aktuell zulässige Übertragungsrate auf den zuvor ermittelten neuen Wert gesetzt und die erste zeitliche Änderungsinformation durch eine zweite zeitliche Änderungsinformation ersetzt. Anschließend wird durch die DGCRA-Überwachungsprozedur die aktualisierte aktuell zulässige Übertragungsrate von ATM-Zellen solange überwacht, bis der eine aktuelle zeitliche Änderungsinformation repräsentierende Zähler abgelaufen ist und eine Korrektur der aktuell zulässigen Übertragungsrate erforderlich ist. Für die Bestimmung der jeweils verbindungsindividuell aktuell zulässigen Übertragungsrate von ATM-Zellen sind somit pro virtuelle Verbindung mindestens zwei Zähler für die Realisierung der zeitlichen Änderungsinformationen und mindestens drei Speichereinheiten zur Abspeicherung der Übertragungsraten vorgesehen.

In der japanischen Offenlegungsschrift 10 065694 wird eine UPC-Unit und ein UPC-Verfahren offenbart, bei dem eine UPC-Unit eine Überlastungserkennung zur Ermittlung von Überlastungen eines Netzwerkes sowie zur Bestimmung von Parametern der Überlastungen enthält, einen schreibbaren Speicher zur Speicherung dieser Parameter und eine Einrichtung zur Überprüfung dieser Parameter anhand von in Senderichtung übertragenen Zellen.

Die der Erfindung zugrundeliegende Aufgabe besteht darin, die Bestimmung der aktuell zulässigen Übertragungsrate von ATM-Zellen von virtuellen Verbindungen einer ATM-Kommunikationseinrichtung zu verbessern. Die Aufgabe wird durch die Merkmale des Patentanspruches 1 gelöst.

Der wesentliche Aspekt des erfindungsgemäßen Verfahrens ist darin zu sehen, daß bei der Bestimmung der aktuell zulässigen Übertragungsrate von ATM-Zellen von virtuellen Verbindungen mit variablen Übertragungsraten mit Hilfe von Übertragungsratenänderungen zugeordneten zeitlichen Änderungsinformationen innerhalb einer ATM-Kommunikationseinrichtung keine oder mindestens eine verbindungsindividuell bestimmte Übertragungsrate von ATM-Zellen und keine oder mindestens eine zugehörige zeitliche Änderungsinformation in einer Speichereinheit zwischengespeichert werden. Desweiteren erfolgt die Berechnung der zeitlichen Änderungsinformationen von Übertragungsratenänderungen mit Hilfe von zwei verbindungsindividuell vorgebbaren Verzögerungszeiten durch eine Übertragungsratenbehandlungsroutine und durch eine Aktualisierungsroutine werden nach Überschreitung einer vorgegebenen Zeitspanne die zeitlichen Änderungsinformationen mit Hilfe eines aktuellen Zeitwertes, einer Kalenderinformation und einer verbindungsindividuellen Kalenderinformation aktualisiert. Weiterhin wird die Anzahl der aktuell zwischengespeicherten Übertragungsraten und deren Größenverhältnis zueinander mit Hilfe eines Listenparameters angezeigt, wobei mit Hilfe des Listenparameterwertes die Bestimmung der aktuell zulässigen Übertragungsrate und eine Aktualisierung des Listenparameterwertes erfolgt. Die Verwendung eines einfachen zusätzlichen Listenparameters bringt den Vorteil mit sich, daß die im Vorschlag I.371.1 "Traffic control and congestion control in B-ISDN: Conformance definitions for ABT and ABR" der ITU definierte maximale Übertragungsrate von ATM-Zellen beim erfindungsgemäßen Verfahren nicht erforderlich ist und somit nicht gespeichert und verarbeitet werden muß, wodurch Speicher eingespart und auch unter Berücksichtigung eines dynamisch zu verarbeitenden Listenparameters die ATM-Kommunikationseinrichtung dynamisch entlastet wird. Außerdem kann die Aktualisierung der aktuell zulässigen Übertragungsrate von ATM-Zellen mit Hilfe des Listenparameters von der Ubertragungsratenbehandlungsroutine zeitlich entkoppelt werden, so daß eine zeitunkritischere Implementierung des erfindungsgemäßen Verfahrens im Vergleich zu dem in der ITU 1.371.I genannten Verfahrensvorschlag in der Kommunikationseinrichtung möglich ist. Dabei ist besonders vorteilhaft, daß beim erfindungsgemäßen Verfahren keine verbindungsindividuelle, die zeitlichen Änderungsinformationen repräsentierende Zähler erforderlich sind, nach deren Ablauf die aktuell zulässige Übertragungsrate an die Übertragungsratenänderung angepaßt wird. Erfindungsgemäß erfolgt diese Anpassung der aktuell zulässigen Übertragungsrate, wenn die aktuell zulässige Übertragungsrate für die Überwachungsprozedur zur Verfügung zu stellen ist. Damit wird die Belastung der Steuereinheit der ATM-Kommunikationseinrichtung gleichmäßiger verteilt und auftretende Spitzenbelastungen reduziert.

Gemäß einer weiteren Ausgestaltung des erfindungsgemäßen Verfahrens wird die verbindungsindividuelle Bestimmung der aktuell zulässigen Übertragungsrate von ATM-Zellen für eine virtuelle Verbindung entweder bei der Ankunft einer ATM-Zelle in einer ersten Übermittlungsrichtung oder bei der Ankunft einer Resource-Management-Zelle in einer zweiten, entgegengesetzt zur ersten gerichteten Übermittlungsrichtung oder nach einem Überschreiten der vorgegebenen Zeitspanne in der ATM-Kommunikationseinrichtung durchgeführt. Damit ist der Vorteil verbunden, daß die Anpassung der aktuell zulässigen Übertragungsrate zu unterschiedlichen Zeitpunkten durchgeführt werden kann und nicht durch den Ablauf eines verbindungsindividuellen, die zeitlichen Änderunginformationen repräsentierenden Zählers zeitlich fixiert ist. Somit wird eine Flexibilisierung bzgl. der Reihenfolge der Abarbeitung der einzelnen Verfahrenschritte zur Bestimmung der aktuell zulässigen Übertragungsrate erreicht und insbesondere eine vorteilhafte Nutzung der Rechnerresourcen der ATM-Kommunikationseinrichtung ermöglicht.

Vorteilhaft ist bei einem ersten Listenparameterwert keine aktuelle Übertragungsrate von ATM-Zellen zwischengespeichert, bei einem zweiten Listenparameterwert eine erste aktuelle Übertragungsrate von ATM-Zellen zwischengespeichert. Desweiteren sind bei einem dritten Listenparameterwert zwei aktuelle Übertragungsraten zwischengespeichert, wobei die erste Übertragungsrate kleiner als die zweite Übertragungsrate ist, und bei einem vierten Listenparameterwert zwei aktuelle Übertragungsraten zwischengespeichert, wobei die erste Übertragungsrate größer als die zweite Übertragungsrate ist. Dies bedeutet, daß mit geringerem Informationsumfang - 2 Bit - Informationen über die Anzahl der vorliegenden aktuellen Übertragungsraten und deren Größenverhältnisse zueinander auf den Listenparameter abgebildet werden. Somit stellt der Listenparameterwert eine Information über die Konstellation der zwischengespeicherten Übertragungsraten dar, die beispielsweise im in der ITU I.371.1 offenbarten Verfahren jeweils erneut ermittelt werden müssen, wenn die obengenannte Information über die Konstellation der zwischengespeicherten Übertragungsratem für den Ablauf des Verfahrens erforderlich ist.

Gemäß einer vorteilhaften Ausgestaltung des erfindungsgemäßen Verfahrens ist einer ersten aktuell zwischengespeicherten Übertragungsrate eine erste zeitliche Änderungsinformationen zugeordnet und einer zweiten aktuell zwischengespeicherten Übertragungsrate eine zweite zeitliche Änderungsinformationen zugeordnet. Die Zuordnung der aktuell zwischengespeicherten Übertragungsraten zu den zeitlichen Änderungsinformationen ist auf den ITU-I-Standard I.371.1 abgestimmt.

Nach einer weiteren Ausgestaltung des erfindungsmäßen Verfahrens wird bei einer Übereinstimmung der Kalenderinformation mit der verbindungsindividuellen Kalenderinformation ein aktueller, verbindungsindividueller Zeitwert dem aktuellen Zeitwert zugordnet, ansonsten wird dem aktuellen, verbindungsindividuellen Zeitwert die Summe des aktuellen Zeitwertes und der vorgegebenen Zeitspanne zugeordnet. Anschließend wird bei einem dritten oder vierten Listenparameterwert beim Vorliegen eines aktuellen verbindungsindividuellen Zeitwertes, der größer ist als die zweite zeitliche, zwischengespeicherte Änderungsinformation, der aktuell zulässigen Übertragungsrate der Wert der zweiten aktuell zwischengespeicherten Übertragungsrate und dem Listenparameter der erste Listenparameterwert zugeordnet, ansonsten beim Vorliegen eines aktuellen verbindungsindividuellen Zeitwertes, der größer ist als die erste zeitliche, zwischengespeicherte Änderungsinformation, der aktuell zulässigen Übertragungsrate der Wert der ersten aktuell zwischengespeicherten Übertragungsrate, der ersten aktuell zwischengespeicherten Übertragungsrate der Wert der zweiten aktuell zwischengespeicherten Übertragungsrate und der ersten zeitlichen Änderungsinformation der Wert der zweiten zeitlichen Änderungsinformation und dem Listenparameter der zweite Listenparameterwert zugeordnet. Weiterhin wird bei einem zweiten Listenparameterwert beim Vorliegen eines aktuellen verbindungsindividuellen Zeitwertes, der größer ist als die erste zeitliche, zwischengespeicherte Änderungsinformation, der aktuell zulässigen Übertragungsrate der Wert der ersten aktuell zwischengespeicherten Übertragungsrate und dem Listenparameter der erste Listenparameterwert zugeordnet, und bei einem ersten Listenparameterwert keine Aktualisierung der zeitlichen, zwischengespeicherten Änderungsinformationen, der aktuell zulässigen Übertragungsrate und des Listenparameters durchgeführt. Diese vorteilhafte Aktualisierung der aktuell zulässigen Übertragungsrate mit Hilfe des Listenparameters ermöglicht unter anderem eine besonders einfache schaltungstechnische Realisierung innerhalb der ATM-Kommunikationseinrichtung.

Ein weiterer Vorteil des erfindungsgemäßen Verfahrens ist darin zu sehen, daß aus einer in der zweiten Übermittlungsrichtung übermittelten, ankommenden Resource-Management-Zelle eine explizite Übertragungsrate gelesen und in der ATM-Kommunikationseinrichtung zwischengespeichert wird, wobei die explizite Übertragungsrate die aktuell mögliche in einer weiteren ATM-Kommunikationseinrichtung in der ersten Übermittlungsrichtung übermittelbare Übertragungsrate darstellt und von der weiteren ATM-Kommunikationseinrichtung mit der aktuell möglichen Übermittlungskapazität in die Resource-Management-Zelle eingetragen wird. Das Lesen und Zwischenspeichern der expliziten Übertragungsrate ist auf den ITU-I-Standard I.371.1 abgestimmt.

Vorteilhaft sind die zwei verbindungsindividuell vorgebbaren Verzögerungszeiten durch eine eine Übertragungsratenerhöhung repräsentierende erste Verzögerungszeit und durch eine eine Übertragungsratenerniedrigung repräsentierende zweite Verzögerungszeit dargestellt, wobei die erste Verzögerungszeit kleiner ist als die zweite Verzögerungszeit. Die Repräsentation einer Übertragungsratenerhöhung bzw. -erniedrigung durch zwei verbindungsindividuell vorgebbare Verzögerungszeiten ist auf den ITU-I-Standard I.371.1 abgestimmt.

Weitere vorteilhafte Ausgestaltungen des erfindungsgemäßen Verfahrens sind den weiteren Ansprüchen zu entnehmen.

Im folgenden wird das erfindungsgemäße Verfahren anhand eines Blockschaltbildes und mehrerer Ablaufdiagramme näher erläutert.
- Figur 1: zeigt in einem Blockschaltbild eine für die Realisierung des erfindungsgemäßen Verfahrens geeignete ATM-Kommunikationseinrichtung, und
- Figur 2: zeigt Ablaufdiagramme der drei unterschiedlichen Behandlungsroutinen.

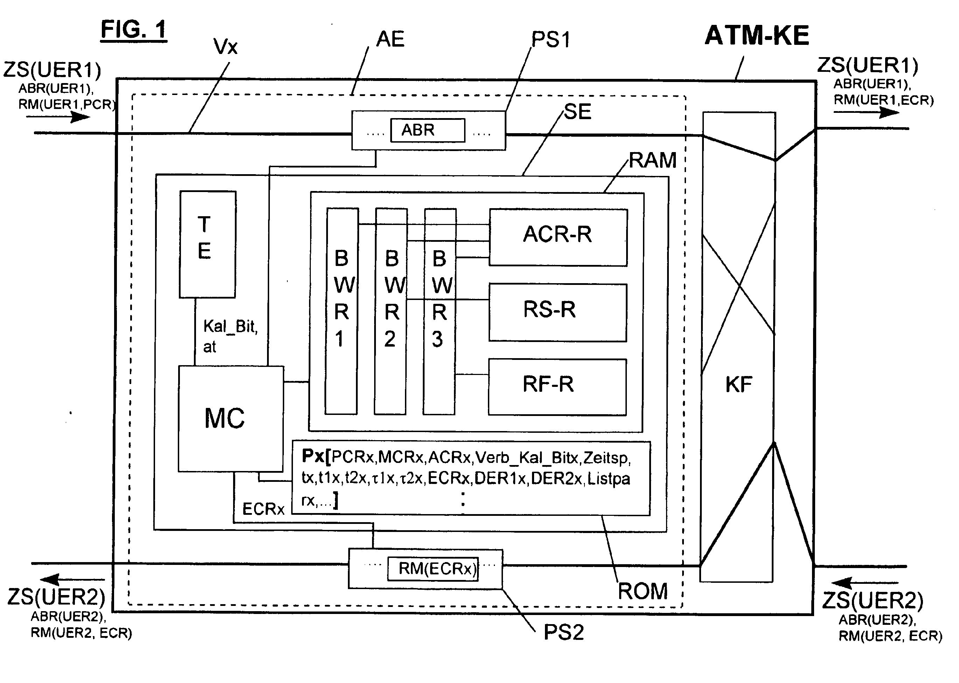

In dem Blockschaltbild nach Figur 1 ist eine nach dem asynchronen Transfer Modus wirkende ATM-Kommunikationseinrichtung ATM-KE schematisch dargestellt, bei der eine virtuelle Verbindung Vx beispielhaft durch einen ersten Zellenstrom ZS(UER1) mit einer ersten Übermittlungsrichtung UER1 und einen zweiten Zellenstrom ZS(UER2) mit einer zweiten Übermittlungsrichtung UER2 angedeutet ist. Über die dargestellte virtuelle Verbindungen Vx werden ATM-Zellen nach dem Asynchronen Transfer Modus übertragen, wobei variable Übertragungsraten für die Übertragung der ATM-Zellen von virtuellen Verbindungen vorgesehen sind. Bei virtuellen Verbindungen mit variablen Übertragungsraten werden die zu übertragenden ATM-Zellen als Available-Bit-Rate-Zellen ABR(UER1)/ABR(UER2) bezeichnet, wobei zusätzlich periodisch in einer Sendeeinrichtung in den ersten Zellenstrom ZS(UER1) Steuerzellen eingefügt werden, die als Resource-Management-Zellen RM(UER1)/RM(UER2) bezeichnet werden. In Figur 1 ist beispielhaft der sich aus ersten Available-Bit-Rate-Zellen ABR(UER1) und ersten Resource-Management-Zellen RM(UER1) zusammensetzende erste Zellenstrom ZS(UER1) dargestellt. Dabei wird in Abstimmung auf den ITU-I-Standard I.371.1 beim Aufbau einer virtuellen Verbindung die explizite Übertragungsrate ECRx mit einer Maximum-Übertragungsrate PCRx initialisiert und in die Resource-Management-Zelle RM(UER1, PCRx) eingetragen. Der zweite Zellenstrom ZS(UER2) ist analog zum ersten aus zweiten Available-Bit-Rate-Zellen ABR(UER2) und zweiten Resource-Management-Zellen RM(UER2) zusammengesetzt.

Desweiteren weist die ATM-Kommunikationseinrichtung ATM-KE mehrere über ein Koppelfeld KF verbundene Anschlußeinheiten AE auf, wobei Figur 1 beispielhaft nur eine von einer Mehrzahl von Anschlußeinheiten der ATM-Kommunikationseinrichtung ATM-KE für eine virtuelle Verbindung Vx zeigt - das erfindungsgemäße Verfahren ist in analoger Weise in weiteren Anschlußeinheiten AE realisiert. In den Anschlußeinheiten AE sind zum Zwecke der Zwischenspeicherung der Available-Bit-Rate-Zellen ABR(UER1)/ABR(UER2) und der Resource-Management-Zellen RM(UER1)/RM(UER2) Pufferspeicher PS1/PS2 vorgesehen, wobei der erste Pufferspeicher PS1 dem ersten Zellenstrom ZS(UER1) und der zweite Pufferspeicher PS2 dem zweiten Zellenstrom ZS(UER2) zugeordnet ist. Weiterhin weist die Anschlußeinheit AE eine zur Bestimmung der aktuell zulässigen Übertragungsrate ACRx vorgesehene und mit den beiden Pufferspeichern PS1/PS2 verbundene Steuereinheit SE auf, in der die aktuell zulässige Übertragungsrate ACRx programmtechnisch mit Hilfe von ersten, zweiten und dritten Bewertungsroutinen BWR1/2/3 bestimmt wird. Die Steuereinheit SE besteht aus einer zur Ermittlung des aktuellen Zeitwertes at vorgesehenen Zeitwert-Zähler-Einheit TE, sowie einem Mikrokontroller MC und zwei weiteren flüchtigen bzw. nichtflüchtigen Speichereinheiten RAM,ROM, wobei durch den Zeitwert-Zähler TE der aktuelle Zeitwert at der jeweiligen ATM-Kommunikationseinrichtung ATM-KE berechnet wird. Der Mikrokontroller MC ist für die programmtechnische Realisierung des erfindungsgemäßen Verfahrens vorgesehen und dazu insbesondere mit den beiden Pufferspeichern PS1/PS2, der Zeitwert-Zähler-Einheit TE, einer flüchtigen Speichereinheit RAM und einer nichtflüchtigen Speichereinheit ROM verbunden. Zusätzlich wird dem Mikrokontroller MC von der Zeitwert-Zähler-Einheit TE die beim Überschreiten einer vorgegebenen Zeitspanne invertierte, eine ein Bit umfassende Kalenderinformation Kal_Bit und der aktuelle Zeitwert at angezeigt, mit deren Hilfe eine Aktualisierung des aktuellen verbindungsindividuellen Zeitwertes tx durchgeführt werden kann.

In der nichtflüchtigen Speichereinheit ROM werden alle zur Ausführung des erfindungsgemäßen Verfahrens erforderlichen, verbindungindividuellen Parameter Px zwischengespeichert und bei Bedarf durch den Mikrokontroller MC aus der nichtflüchtigen Speichereinheit ROM ausgelesen. In Figur 1 sind beispielhaft die folgenden Parameter Px für die virtuelle Verbindung Vx in der nichtflüchtigen Speichereinheit ROM zwischengespeichert:
- PCRx: Maximum-Übertragungsrate von ATM-Zellen
- MCRx: Minimum-Übertragungsrate von ATM-Zellen
- ACRx: aktuell zulässige Übertragungsrate
- Verb_Kal_Bitx: verbindungsindividuelle Kalenderinformation
- Zeitsp: vorgegebene Zeitspanne
- tx: verbindungsindividueller Zeitwert
- t1x: erste zeitliche Änderungsinformation
- t2x: zweite zeitliche Änderungsinformation
- τ1x: erste Verzögerungszeit
- τ2x: zweite Verzögerungszeit
- ECRx: explizite Übertragungsrate
- DER1x: erste zwischengespeicherte Übertragungsrate
- DER2x: zweite zwischengespeicherte Übertragungsrate
- Listparx: Listenparameter

Dabei ist unter der Maximum-Übertragungsrate PCRx die standardgemäß festgelegte Rate zu verstehen, die bei einer bestehenden virtuellen Verbindung übertragungstechnisch realisierbar ist. Analog dazu ist eine Minimum-Übertragungsrate MCRx standardgemäß definiert, die die kleinste realisierbare Übertragungrate einer bestehenden, virtuellen Verbindung repräsentiert. Weiterhin ist die aktuell zulässige Übertragungsrate ACRx abgespeichert, bei deren Einhaltung ein ressourcenoptimierter ATM-Zellenverkehr sichergestellt ist und die deshalb der jeweiligen Überwachungsprozedur zur Überwachung zur Verfügung gestellt werden muß. Die aktuell zulässige Übertragungsrate ACRx wird beim Verbindungsaufbau mit der Anfangsübertragungsrate ICRx initialisiert. Durch die verbindungsindividuelle Kalenderinformation Verb_Kal_Bitx wird die Synchronisation des aktuellen Zeitwertes at und des verbindungsindividuellen Zeitwertes tx unterstützt und das Überschreiten einer vorgegebenen Zeitspanne Zeitsp durch den aktuellen Zeitwert at mitangezeigt, wobei beim Verbindungsaufbau die verbindungsindividuelle Kalenderinformation Verb_Kal_Bitx mit der aktuell ermittelten Kalenderinformation Kal_Bit initialisiert wird. Desweitern sind der verbindungsindividuelle Zeitwert tx, die erste Verzögerungszeit τ1x und die zweite Verzögerungszeit τ2x zwischengespeichert, wobei bei einer Übertragungsratenerhöhung mit einer um die erste Verzögerungszeit τ1x verzögerten Ankunft der jeweiligen Available-Bit-Rate-Zelle ABR(UER1) und bei einer Übertragungsratenerniedrigung mit einer um die zweite Verzögerungszeit τ2x verzögerten Ankunft der jeweiligen Available-Bit-Rate-Zelle ABR(UER1) gerechnet werden muß. Ergänzend ist noch festzustellen, daß in Abstimmung auf den ITU-I-Standard I.371.1 die erste Verzögerungszeit τ1x kleiner als die zweite Verzögerungszeit τ2x gewählt ist. Es wird eine explizite Übertragungsrate ECRx verbindungsindividuell zwischengespeichert, die aus der zweiten Resource-Management-Zelle RM(UER2)gelesen wird und mit Hilfe des erfindungsgemäßen Verfahrens zur Bestimmung der aktuell zulässigen Übertragungsrate ACRx benutzt wird. Zusätzlich wird nach der Abarbeitung der zweiten Bewertungsroutine BWR2 die aus der zweiten Resource-Management-Zelle RM(UER2) gelesene, explizite Übertragungsrate ECRx als zweite zwischengespeicherte Übertragungsrate DER2x zwischengespeichert und eine erste zwischengespeicherte Übertragungsrate DER1x zur Ausführung des erfindungsgemäßen Verfahrens bereitgestellt. Beim Verbindungsaufbau wird der zweiten zwischengespeicherten Übertragungsrate DER2x und der in der nichtflüchtigen Speichereinheit ROM zwischengespeicherten, expliziten Übertragungsrate ECRx der Wert der Anfangsübertragungsrate ICRx zugewiesen. Diesen zwischengespeicherten Übertragungsraten DER1x/DER2x wird jeweils eine erste zeitliche Änderungsinformation t1x und eine zweite zeitliche Änderungsinformation t2x verbindungsindividuell zugeordnet, wobei unter einer zeitlichen Änderungsinformation bzgl. der Übertragungsrate der Zeitpunkt zu verstehen ist, an dem die Überwachungsprozedur mit einer Übertragungsratenänderung zu rechnen hat bzw. ab dem die geänderte Übertragungsrate überwacht werden muß. Wesentlicher Bestandteil des erfindungsgemäßen Verfahrens ist der Listenparameter, mit dessen Hilfe die Anzahl der aktuell zwischengespeicherten Übertragungsraten DER1x/DER2x und deren Größenverhältnis zueinander angezeigt wird. Dabei kann der Listenparameter folgende Werte annehmen:

| Listenparameterwert | Bedeutung |
|---|---|
| 0 | keine Übertragungsrate zwischengespeichert |
| 1 | eine Übertragungsrate zwischengespeichert, wobei DER1x = DER2x ist |
| 2 | zwei Übertragungsraten zwischengespeichert, wobei DER1x > DER2x ist |
| 3 | zwei Übertragungsraten zwischengespeichert, wobei DER1x < DER2x ist |

Beim Verbindungsaufbau wird dem Listenparameter der Wert null zugewiesen. Basierend auf dem aktuellen Wert des Listenparameters Listparx wird die Bestimmung der aktuell zulässigen Übertragungsrate ACRx mit Hilfe der jeweiligen Bewertungsroutine BWR1/2/3 durchgeführt.

Im Gegensatz zu der nichtflüchtigen Speichereinheit ROM werden in der flüchtigen Speichereinheit RAM die das erfindungsgemäße Verfahren repräsentierenden Bewertungsroutinen BWR1/2/3 zwischengespeichert, die wiederum auf weitere Routinen - die Allowed-Cell-Rate-Routine ACR-R, die Rate-Scheduling-Routine RS-R und die Refresh-Routine RF-R - zugreifen. Dabei greift die erste Bewertungsroutine BWR1 auf die Allowed-Cell-Rate-Routine ACR-R zu, die zweite Bewertungsroutine BWR2 auf die Allowed-Cell-Rate-Routine ACR-R und die Rate-Scheduling-Routine RS-R und die dritte Bewertungsroutine BWR3 auf die Allowed-Cell-Rate-Routine ACR-R und die Refresh-Routine RF-R zu, wobei alle drei Bewertungsroutinen BWR1/2/3 mit Hilfe des Mikrokontrollers MC programmtechnisch realisiert werden. Dies bedeutet insbesondere, daß die einzelnen Bewertungsroutinen BWR1/2/3 durch den Mikrokontroller MC ausgeführt werden und dieser die dazu nötigen Lese- und Schreibzyklen bzgl. der nichtflüchtigen Speichereinheit ROM einleitet.

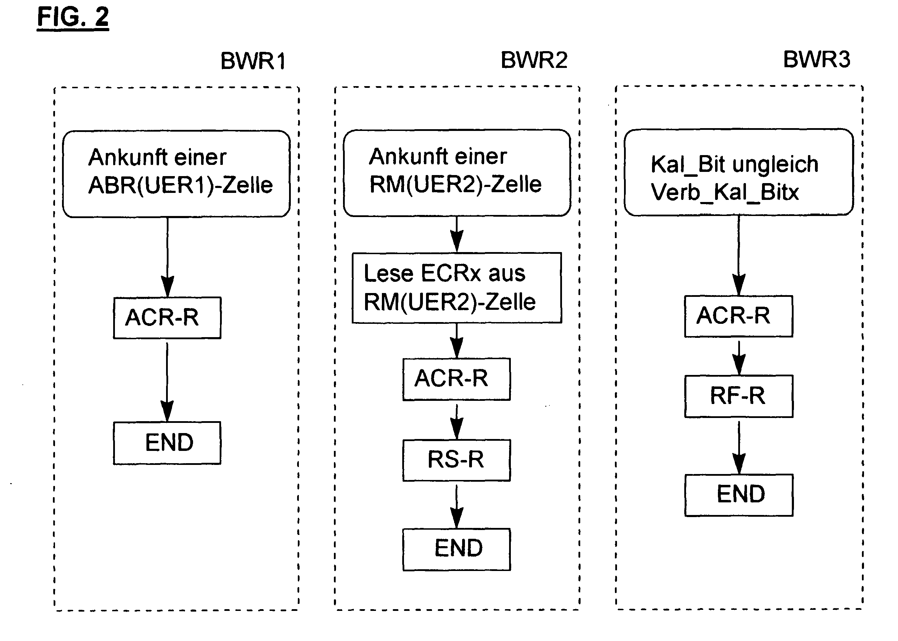

In Figur 2 werden explizit die einzelnen Bewertungsroutinen BWR1/2/3 mit Hilfe von Ablaufdiagrammen näher erläutert, wobei die einzelnen Bewertungsroutinen BWR1/2/3 ereignisgesteuert mit Hilfe des Mikrokontrollers MC abgearbeitet werden. Hierbei wird beispielsweise die Ankunft einer in der ersten Übermittlungsrichtung UER1 übertragenen ersten Available-Bit-Rate-Zelle ABR(UER1) im ersten Pufferspeicher PS1 durch den Mikrokontroller MC programmtechnisch erkannt, die erste Bewertungroutine BWR1 gestartet und die zur Ausführung der ersten Bewertungroutine BWR1 benötigten Parameter Px im Zuge eines Lesezykluses aus der nichtflüchtigen Speichereinheit ROM in den flüchtigen Speicher RAM geladen. Dabei wird zunächst die Allowed-Cell-Rate-Routine ACR-R abgearbeitet, bei der in einem ersten Schritt die Kalenderinformation Kal_Bit mit der verbindungsindividuellen Kalenderinformation Verb_Kal_Bitx verglichen wird und bei einer Übereinstimmung dem verbindungsindividuellen Zeitwert tx der Wert des aktuellen Zeitwertes at zugeordnet wird. Ansonsten, d.h. beim Vorliegen von unterschiedlichen Kalenderinformationen Kal_Bit, Verb_Kal_Bitx, wird dem verbindungsindividuellen Zeitwert tx der Summenwert aus aktuellem Zeitwert at und der vorgegebenen Zeitspanne Zeitsp zugeordnet. Im Anschluß daran wird der Hauptteil der Allowed-Cell-Rate-Routine ACR-R abgearbeitet, der sich aus folgenden Schritten zusammensetzt:
Wenn (Listparx = 2) oder (Listparx = 3)
dann wenn tx ≥ t2x
   dann ACRx = DER2x
      Listparx = 0
   sonst wenn tx ≥ t1x
      dann ACRx = DER1x
         DER1x = DER2x
         tx1 = tx2
         Listparx = 1
sonst wenn Listparx = 1
   dann wenn tx ≥ t1x
      dann ACRx = DER1x
         Listparx = 0

Nach Abarbeitung der Allowed-Cell-Rate-Routine ACR-R wird die erste Bewertungsroutine BWR1 beendet und die im Ablauf der ersten Bewertungsroutine BWR1 veränderten Parameter werden in der nichtflüchtigen Speichereinheit ROM aktualisiert. Beim Eintreffen einer weiteren in erster Übermittlungsrichtung UER1 ankommender Available-Bit-Rate-Zelle ABR(UER1) wird die erste Bewertungsroutine BWR1 erneut vom Mikrokontroller MC aufgerufen, sofern nicht die zweite oder dritte Bewertungsroutine BWR2/3 auf den verbindungsindividuellen Parametersatz zugreifen, d.h. gerade ausgeführt werden.

Weiterhin wird durch den Mikrokontroller MC auf das Ereignis "Ankunft einer in zweiter Übermittlungsrichtung UER2 übertragenen zweiten Resource-Management-Zelle RM(UER2) dahingehend reagiert, daß zunächst aus der in zweiter Übermittlungsrichtung UER2 übertragenen zweiten Resource-Management-Zelle RM(UER2) die explizite Übertragungsrate ECRx gelesen wird und im Anschluß daran die zweite Bewertungsroutine BWR2 gestartet wird, wobei zuvor die zu deren Ablauf benötigten verbindungsindividuellen Parameter Px im Zuge eines Lesezyklus aus der nichtflüchtigen Speichereinheit ROM in die flüchtige Speichereinheit RAM geladen werden müssen. Dort wird wiederum zunächst durch den Mikrokontroller MC auf die Allowed-Cell-Rate-Routine ACR-R zugriffen und diese wie oben beschrieben abgearbeitet. Im Anschluß an die Allowed-Cell-Rate-Routine ACR-R wird die Rate-Scheduling-Routine RS-R im Zuge der zweiten Bewertungsroutine BWR2 aufgerufen und die zusätzlich für den Ablauf der Rate-Scheduling-Routine RS-R erforderlichen, verbindungsindividuellen Parameter Px aus der nichtflüchtigen Speichereinheit ROM in die flüchtige Speichereinheit RAM geladen. Beim Abarbeiten der Rate-Scheduling-Routine RS-R wird der Wert der aktuell aus der zweiten Resource-Management-Zelle RM(UER2) gelesenen expliziten Übertragungsrate ECRx mit dem Wert der Maximum-Übertragungsrate PCRx verglichen und beim Vorliegen einer Überschreitung des Wertes der Maximum-Übertragungsrate PCRx durch den Wert der expliziten Übertragungsrate ECRx wird der expliziten Übertragungsrate ECRx der Wert der Maximum-Übertragungsrate PCRx zugewiesen. Weiterhin wird der Wert der expliziten Übertragungsrate ECRx mit dem Wert der Minimum-Übertragungsrate MCRx verglichen und beim Vorliegen einer Unterschreitung des Wertes der Minimum-übertragungsrate MCRx durch den Wert der expliziten Übertragungsrate ECRx ihr der Wert der Minimum-Übertragungsrate MCRx zugewiesen. Desweiteren wird in Abstimmung auf den ITU-I-Standard I.371.1 im Zuge der Rate-Scheduling-Routine RS-R überprüft, ob es sich bei der in zweiter Übermittlungsrichtung UER2 angekommenen zweiten Resource-Management-Zelle RM(UER2,ECR) um keine Backward-Explicit-Congestion-Notification-Zelle handelt und der Wert der expliziten Übertragungsrate ECRx ungleich dem Wert der zweiten zwischengespeicherten Übertragungsrate DER2 ist oder ob es sich bei der in zweiter Übermittlungsrichtung UER2 angekommenen zweiten Resource-Management-Zelle RM(UER2,ECR) um eine Backward-Explicit-Congestion-Notification-Zelle handelt und der Wert der expliziten Übertragungsrate ECRx kleiner als der Wert der zweiten zwischengespeicherten Übertragungsrate DER2 ist. Dabei ist unter einer Backward-Explicit-Congestion-Notification-Zelle diejenige Zelle zu verstehen, die von einer weiteren ATM-Kommunikationseinrichtung ATM-KE erzeugt und in den zweiten Zellenstrom ZS(UER2) eingefügt wurde. Liegt die obengenannte Konstellation der Backward-Explicit-Congestion-Notification-Zelle und der expliziten Übertragungsrate ECRx vor, so wird der folgende, verbleibende Abschnitt der Rate-Scheduling-Routine RS-R abgearbeitet:
wenn Listparx ≠ 0
dann wenn t1x ≥ tx + τ2x
   dann wenn ECRx ≥ DER1x
      dann DER1x = ECRx
         wenn ECRx ≥ ACRx
         dann t1x = tx + τ2x
         Listparx = 1
      sonst wenn ECRx < DER2x
         dann t2x = tx + τ1x
            Listparx = 2
   sonst wenn ((Listparx = 1) oder (Listparx = 2))
      dann wenn ECRx ≥ DER1x
         dann t2x = tx + τ2x
            Listparx = 3
         sonst wenn ECRx < DER2x
            dann t2x = tx + τ1x
               Listparx = 2
         sonst wenn ECRx < DER2x
            dann DER1x = DER2x
               t2x = tx + τ1x
               Listparx = 2
sonst wenn ECRx > ACRx
   dann t1x = tx + τ2x
   sonst t1x = tx + τ1x
DER1x = ECRx
Listparx = 1,

Am Ende der Rate-Scheduling-Routine RS-R wird unabhängig von dem zuvor aufgeführten Abschnitt der Rate-Scheduling-Routine RS-R der zweiten zwischengespeicherten Übertragungsrate DER2x der Wert der expliziten Übertragungsrate ECRx zugewiesen. Anschließend werden die im Zuge der zweiten Bewertungsroutine BWR2 aktualisierten Parameter Px in der nichtflüchtigen Speichereinheit ROM abgelegt und die zweite Bewertungsroutine BWR2 beendet. Wiederum wird beim Eintreffen einer weiteren in zweiter Übermittlungsrichtung UER2 ankommender zweiten Resource-Management-Zelle RM(UER2,ECR) die zweite Bewertungsroutine BWR2 erneut vom Mikrokontroller MC aufgerufen, sofern nicht die erste oder dritte Bewertungsroutine BWR1/3 auf den verbindungsindividuellen Parametersatz Px zugreifen, d.h. gerade ausgeführt werden.

Durch die zur Ermittlung des aktuellen Zeitwertes at vorgesehenen Zeitwert-Zähler-Einheit TE wird dem Mikrokontroller MC ständig die aktuelle Zeit at und die Kalenderinformation Kal_Bit zur Verfügung gestellt, wobei beim Überschreiten der vorgegebenen Zeitspanne Zeitsp die Zeitwert-Zähler-Einheit TE den aktuellen Zeitwert at zurücksetzt und die Kalenderinformation Kal_Bit invertiert. Liegt keine Auslastung des Mikrokontrollers MC durch die erste oder zweite Bewertungsroutine BWR1/2 vor, so überprüft der Mikrokontroller im Zuge der dritten Bewertungsroutine BWR3, ob eine Änderung bzw. Invertierung der Kalenderinformation Kal_Bit vorliegt. Dazu wird die von der Zeitwert-Zähler-Einheit TE zur Verfügung gestellte Kalenderinformation Kal_Bit mit der verbindungsindividuellen Kalenderinformation Verb_Kal_Bitx verglichen und beim Vorliegen unterschiedlicher Kalenderinformationen Kal Bit, Verb_Kal_Bitx wird die Allowed-Cell-Rate-Routine ACR-R analog zu der ersten bzw. zweiten Bewertungsroutine BWR1/2 abgearbeitet. Desweiteren wird durch die dritte Bewertungsroutine BWR3 auf die Refresh-Routine RF-R zugegriffen und diese ausgeführt, wobei zuvor die für die Ausführung der Refresh-Routine RF-R erforderlichen, verbindungsindividuellen Parameter Px von der nichtflüchtigen Speichereinheit ROM in die flüchtige Speichereinheit geladen werden. Hierzu ist die Refresh-Routine RF-R wie folgt ausgestaltet:
wenn t1x ≥ Zeitsp
dann t1x = t1x - Zeitsp
sonst t1x = 0
wenn t2x ≥ Zeitsp
dann t2x = t2x - Zeitsp
sonst t2x = 0
invertiere Verb_Kal_Bitx

Im folgenden werden die aktualisierten, verbindungsindividuellen Parameter Px mit Hilfe des Mikrokontrollers MC von der flüchtigen Speichereinheit RAM in die nichtflüchtige Speichereinheit ROM übermittelt und dort abgelegt. Anschließend wird die dritte Bewertungsroutine BWR3 beendet. Auch in diesem Fall wird beim Vorliegen von unterschiedlichen Kalenderinformationen Kal_Bit, Verb_Kal_Bitx die dritte Bewertungsroutine BWR3 erneut vom Mikrokontroller MC aufgerufen, sofern nicht die erste oder zweite Bewertungsroutine BWR1/2 auf den verbindungsindividuellen Parametersatz Px zugreifen, d.h. gerade ausgeführt werden.

## Patentansprüche

1. Verfahren zur verbindungsindividuellen Bestimmung der aktuell zulässigen Übertragungsrate (ACRx) von ATM-Zellen von virtuellen Verbindungen (Vx) mit variablen Übertragungsraten mit Hilfe von Übertragungsratenänderungen zugeordneten zeitlichen Änderungsinformationen (t1x,t2x) innerhalb einer ATM-Kommunikationseinrichtung (ATM-KE),
**dadurch gekennzeichnet, dass**
- bei dem keine oder mindestens eine verbindungsindividuell bestimmte Übertragungsrate (DER1x/DER2x) von ATM-Zellen und keine oder mindestens eine zugehörige zeitliche Änderungsinformation (t1x,t2x) in einer Speichereinheit (ROM) zwischengespeichert werden,
- bei dem die Berechnung der zeitlichen Änderungsinformationen (t1x,t2x) von Übertragungsratenänderungen mit Hilfe von zwei verbindungsindividuell vorgebbaren Verzögerungszeiten (τ1x, τ2x) durch eine Übertragungsratenbehandlungsroutine (RS-R) erfolgt,
- bei dem durch eine Aktualisierungsroutine (RF-F) nach Überschreitung einer vorgegebenen Zeitspanne (Zeitsp) die zeitlichen Änderungsinformationen (t1x,t2x) mit Hilfe eines aktuellen Zeitwertes (at), einer Kalenderinformation (Kal_Bit) und einer verbindungsindividuellen Kalenderinformation (Verb_Kal_Bitx) aktualisiert werden,
- bei dem die Anzahl der aktuell zwischengespeicherten Übertragungsraten (DER1x/DER2x) und deren Größenverhältnis zueinander mit Hilfe eines Listenparameters (Listparx) angezeigt wird,
- und bei dem mit Hilfe der zeitlichen Änderungsinformationen (t1x,t2x) und des Listenparameterwertes die Bestimmung der aktuell zulässigen Übertragungsrate (ACRx) und eine Aktualisierung und des Listenparameters (Listparx) erfolgt.

2. Verfahren nach Anspruch 1,
**dadurch gekennzeichnet,**
**daß** die verbindungsindividuelle Bestimmung der aktuell zulässigen Übertragungsrate (ACRx) von ATM-Zellen für eine virtuelle Verbindung (Vx) entweder bei der Ankunft einer ATM-Zelle (ABR(UER1)) in einer ersten Übermittlungsrichtung (UER1) oder bei der Ankunft einer Resource-Management-Zelle (RM(UER1,ECR) in einer zweiten, entgegengesetzt zur ersten gerichteten Übermittlungsrichtung (UER2) oder nach einem Überschreiten der vorgegebenen Zeitspanne (Zeitsp) in der ATM-Kommunikationseinrichtung (ATM-KE) durchgeführt wird.

3. Verfahren nach Anspruch 1 bis 2,
**dadurch gekennzeichnet,**
**daß** bei einem ersten Listenparameterwert (0) keine aktuelle Übertragungsrate (ACRx) von ATM-Zellen zwischengespeichert ist,
**daß** bei einem zweiten Listenparameterwert (1) eine erste aktuelle Übertragungsrate (DER1x) von ATM-Zellen zwischengespeichert ist,
**daß** bei einem dritten Listenparameterwert (2) zwei aktuelle Übertragungsraten (DER1x,DER2x) zwischengespeichert sind und die erste Übertragungsrate (DER1x) größer als die zweite Übertragungsrate (DER2x) ist,
und **daß** bei einem vierten Listenparameterwert (3) zwei aktuelle Übertragungsraten (DER1x,DER2x) zwischengespeichert sind und die erste Übertragungsrate (DER1x) kleiner als die zweite Übertragungsrate (DER2x) ist.

4. Verfahren nach Anspruch 3,
**dadurch gekennzeichnet,**
**daß** einer ersten aktuell zwischengespeicherten Übertragungsrate (DER1x) eine erste zeitliche Änderungsinformationen (t1x) zugeordnet ist und
**daß** einer zweiten aktuell zwischengespeicherten übertragungrate (DER2x) eine zweite zeitliche Änderungsinformationen (t2x) zugeordnet ist.

5. Verfahren nach einem der Ansprüche 3 und 4,
**dadurch gekennzeichnet,**
**daß** bei einer Übereinstimmung der Kalenderinformation (Kal_Bit) mit der verbindungsindividuellen Kalenderinformation (Verb_Kal_Bitx) ein aktueller, verbindungsindividueller Zeitwert (tx) dem aktuellen Zeitwert (at) zugeordnet wird, ansonsten dem aktuellen, verbindungsindividuellen Zeitwert (tx) die Summe des aktuellen Zeitwertes (at) und der vorgegebenen Zeitspanne (Zeitsp) zugeordnet wird,
**daß** bei einem dritten oder vierten Listenparameterwert (2 oder 3)
- beim Vorliegen eines aktuellen verbindungsindividuellen Zeitwertes (tx), der größer ist als die zweite zeitliche, zwischengespeicherte Änderungsinformation (t2x), der aktuell zulässigen Übertragungsrate (ACRx) der Wert der zweiten aktuell zwischengespeicherten Übertragungsrate (DER2x) und dem Listenparameter (Listparx) der erste Listenparameterwert (0) zugeordnet wird,
- ansonsten beim Vorliegen eines aktuellen verbindungsindividuellen Zeitwertes (tx), der größer ist als die erste zeitliche, zwischengespeicherte Änderungsinformation (t1x), der aktuell zulässigen Übertragungsrate (ACRx) der Wert der ersten aktuell zwischengespeicherten Übertragungsrate (DER1x), der ersten aktuell zwischengespeicherten Übertragungsrate (DER1x) der Wert der zweiten aktuell zwischengespeicherten Übertragungsrate (DER2x) und der ersten zeitlichen Änderungsinformation (t1x) der Wert der zweiten zeitlichen Änderungsinformation (t2x) und dem Listenparameter (Listparx) der zweite Listenparameterwert (1) zugeordnet wird,
**daß** bei einem zweiten Listenparameterwert (1)
- beim Vorliegen eines aktuellen verbindungsindividuellen Zeitwertes (tx), der größer ist als die erste zeitliche, zwischengespeicherte Änderungsinformation (t1x), der aktuell zulässigen Übertragungsrate (ACRx) der Wert der ersten aktuell zwischengespeicherten Übertragungsrate (DER1x) und dem Listenparameter (Listparx) der erste Listenparameterwert (0) zugeordnet wird, und
**daß** bei einem ersten Listenparameterwert (0)
- keine Aktualisierung der zeitlichen, zwischengespeicherten Änderungsinformationen (t1x,t2x), der aktuell zulässigen Übertragungsrate (ACRx) und des Listenparameters (Listparx) durchgeführt wird.

6. Verfahren nach einem der Ansprüche 1 bis 5,
**dadurch gekennzeichnet,**
**daß** aus einer in der zweiten Übermittlungsrichtung (UER2) übermittelten, ankommenden Resource-Management-Zelle (RM(UER2,ECRx)) eine explizite Übertragungsrate (ECRx) gelesen und in der ATM-Kommunikationseinrichtung (ATM-KE) zwischengespeichert wird, wobei die explizite Übertragungsrate (ECRx) die aktuell mögliche in einer weiteren ATM-Kommunikationseinrichtung (ATM-KE) in der ersten Übermittlungsrichtung (UER1) übermittelbare Übertragungsrate darstellt und von der weiteren ATM-Kommunikationseinrichtung (ATM-KE) mit der aktuell möglichen Übermittlungskapazität in die Resource-Management-Zelle (RM(UER2,ECRx)) eingetragen wird.

7. Verfahren nach einem der Ansprüche 1 bis 8,
**dadurch gekennzeichnet,**
**daß** die zwei verbindungsindividuell vorgebbaren Verzögerungszeiten (τ1x, τ2x) durch eine eine Übertragungsratenerhöhung repräsentierende erste Verzögerungszeit (τ1x) und durch eine eine Übertragungsratenerniedrigung repräsentierende zweite Verzögerungszeit (τ2x) dargestellt sind, wobei die erste Verzögerungszeit (τ1x) kleiner ist als die zweite Verzögerungszeit (τ2x).

8. Verfahren nach einem der Ansprüche 3 bis 7,
**dadurch gekennzeichnet,**
**daß** beim Aufbau einer virtuellen Verbindung (Vx) die aktuell zulässige Übertragungsrate (ACRx) und die zweite aktuell zwischengespeicherte Übertragungsrate (DER2x) mit dem Wert einer Anfangsübertragungsrate (ICRx) von ATM-Zellen initialisiert wird,
und **daß** dem Listenparameter (Listparx) der erste Listenparameterwert (0) zugeordnet wird und die verbindungsindividuelle Kalenderinformation (Verb_Kal_Bitx) mit der Kalenderinformation initialisiert (Kal_Bit) wird.

9. Verfahren nach einem der Ansprüche 6 bis 8,
**dadurch gekennzeichnet,**
**daß** der zweiten aktuell zwischengespeicherten Übertragungsrate (DER2x) stets der Wert der zuletzt gelesenen, expliziten Übertragungsrate (ECRx) zugewiesen wird.

10. Verfahren nach einem der Ansprüche 2 bis 9,
**dadurch gekennzeichnet,**
**daß** verbindungsindivuell eine Minimum-Übertragungsrate (MCRx) und eine Maximum-Übertragungsrate (PCRx) von ATM-Zelle für eine virtuelle Verbindung (Vx) definiert ist, wobei bei der Ankunft einer Resource-Management-Zelle (RM(UER2,ECRx)) mit einer expliziten Übertragungsrate (ECRx) höher als die Maximum-Übertragungsrate (PCRx) der expliziten Übertragungsrate (ECRx) der Wert der Maximum-Übertragungsrate (PCRx) zugewiesen wird und
bei der Ankunft einer Resource-Management-Zelle (RM(UER2,ECRx)) mit einer expliziten Übertragungsrate (ECRx) kleiner als die Minimum-Übertragungsrate (MCRx) der expliziten Übertragungsrate (ECRx) der Wert der Minimum-Übertragungsrate (MCRx) zugewiesen wird.

11. Verfahren nach einem der Ansprüche 6 bis 10,
**dadurch gekennzeichnet,**
**daß** eine Übertragungsratenbehandlungsroutine (RS-R)
- beim Vorliegen einer im Vergleich zu der zweiten aktuell zwischengespeicherten Übertragungsrate (DER2x) unterschiedlichen in der ATM-Kommunikationseinrichtung (ATM-KE) zwischengespeicherten, expliziten Übertragungsrate (ECRx), die aus einer von der Nachrichtenquelle erzeugten Resource-Management-Zelle (RM(UER2,ECRx)) gelesen wurde
- oder beim Vorliegen eines im Vergleich zu dem Wert der zweiten aktuell zwischengespeicherten Übertragungsrate (DER2x) kleineren Wert als der Wert der in der ATM-Kommunikationseinrichtung (ATM-KE) zwischengespeicherten, expliziten Übertragungsrate (ECRx), die aus einer von einer weiteren ATM-Kommunikationseinrichtung (ATM-KE) in zweiter Übermittlungsrichtung (UER2) in den zweiten Zellenstrom (ZS(UER2)) eingefügten Resource-Management-Zelle (RM(UER2,ECRx)) gelesen wurde
ausgeführt wird.

12. Verfahren nach Anspruch 11,
**dadurch gekennzeichnet,**
**daß** die Übertragungsratenbehandlungsroutine (RS-R) wie folgt ausgestaltet ist:
wenn Listpar ≠ 0
dann wenn t1 ≥ t + τ₂
dann wenn ECR ≥DER1
dann DER1 = ECR
wenn ECR ≥ ACR
dann t1 = t + τ₂
Listpar = 1
sonst wenn ECR < DER2
dann t2 = t + τ1
Listpar = 2
sonst wenn ((Listpar = 1) oder (Listpar = 2))
dann wenn ECR ≥ DER1
dann t2 = t + τ2
Listpar = 3
sonst wenn ECR < DER2
dann t2 = t + τ1
Listpar = 2
sonst wenn ECR < DER2
dann DER1 = DER2
t2 = t + τ1
Listpar = 2
sonst wenn ECR > ACR
dann t1 = t + τ2
sonst t1 = t + τ1
DER1 = ECR
Listpar = 1,
wobei
t den aktuellen verbindungsindividuellen Zeitwert,
t1 die erste zeitliche Änderungsinformationen,
t2 die zweite zeitliche Änderungsinformationen,
τ1 die erste Verzögerungszeit,
τ2 die zweite Verzögerungszeit,
ACR die aktuell zulässige Übertragungsrate,
DER1 die erste zwischengespeicherte Übertragungsrate,
DER2 die zweite zwischengespeicherte Übertragungsrate,
ECR die explizite Übertragungsrate,
Listpar den Listenparameter
repräsentieren.

13. Verfahren nach Anspruch 5
**dadurch gekennzeichnet,**
**daß** bei unterschiedlichen Werten der Kalenderinformation (Kal_Bit) und der verbindungsindividuellen Kalenderinformation (Verb_Kal_Bitx) zusätzlich eine Aktualisierungsroutine (RF-R) wie folgt ausgeführt wird:
wenn t1 ≥ Zeitsp
dann t1 = t1 - Zeitsp
sonst t1 = 0
wenn t2 ≥ Zeitsp
dann t2 = t2 - Zeitsp
sonst t2 = 0
invertiere Verb_Kal_Bit,
wobei
t1 die erste zeitliche Änderungsinformationen,
t2 die zweite zeitliche Änderungsinformationen,
Verb_Kal_Bit die verbindungsindividuelle Kalenderinformation
Zeitsp die vorgegebene Zeitspanne
repräsentieren.

14. Verfahren nach Anspruch 1,5,8 und 13
**dadurch gekennzeichnet,**
**daß** die Kalenderinformation (Kal_Bit) und die verbindungsindividuelle Kalenderinformation (Verb_Kal_Bitx) jeweils durch eine 1-bit-Information gebildet werden.

## Claims

1. A method for determining the allowed cell rate (ACRx) of ATM cells of virtual connections (Vx) for individual connections with variable cell transmission rates with the aid of temporal change information (t1x, t2x) assigned to cell rate changes within an ATM communication device (ATM-KE),
**characterised in that**,
- in the method no or at least one cell rate determined for individual connections (DER1x/DER2x) of ATM cells and no or at least one associated item of temporal change information (t1x, t2x) are buffered in a memory unit (ROM),
- in the method the calculation of the temporal change information (t1x, t2x) of cell rate changes is undertaken with the aid of two connection-individual predeterminable delay times (τ1x, τ2x) through a Rate Scheduling Routine (RS-R),
- in the method, through a refresh routine (RE-R) after a predetermined period of time (Zeitsp) has been exceeded, the temporal change information (t1x, t2x) is refreshed with the aid of a current time value (at), calendar information (Kal_Bit) and connection-individual calendar information (Verb_Kal_Bitx),
- in the method, the number of the currently buffered cell rates (DER1x/DER2x) and their size relationships to each other are shown with the aid of a list parameter (Listparx),
- and in the method, with the aid of the temporal change information (t1x, t2x) and of the list parameter value, the allowed cell rate (ACRx) and a refresh of the list parameter (Listparx) are determined.

2. Method in accordance with claim 1,
**characterized in that**,
the connection-individual determination of the allowed cell rate (ACRx) of ATM cells for a virtual connection (Vx) is performed in the ATM communication device (ATM-KE) either on arrival of an ATM cell (ABR (UER1)) in a first transmission direction (UER1) or on arrival of a resource management cell (RM (UER1, ECR) in a second direction (UER2) opposite to the first direction, or after the predetermined period of time (Zeitsp) has been exceeded.

3. Method in accordance with claim 1 to 2,
**characterised in that**,
no allowed cell rate (ACRx) of ATM cells is buffered for a first list parameter value (0),
a first current cell rate (DER1x) of ATM cells is buffered for a second list parameter value (1),
two current cell rates (DER1x, DER2x) are buffered for a third list parameter value (2) and the first cell rate (DER1x) greater than the second cell rate (DER2x),
and that two current cell rates (DER1x, DER2x) are buffered for a fourth list parameter value (3) and the first cell rate (DER1x) is smaller than the second cell rate (DER2x).

4. Method in accordance with claim 3,
**characterised in that**,
a first current buffered cell rate (DER1x) is assigned first temporal change information (t1x) and
a second current buffered cell rate (DER2x) is assigned second temporal change information (t2x).

5. Method in accordance with one of the claims 3 and 4,
**characterised in that**,
If the calendar information (Kal_Bit) matches the connection-individual calendar information (Verb_Kal_Bitx) a current, connection-individual time value (tx) is assigned to the current time value (at), otherwise the sum of the current time value (at) and the predetermined period of time (Zeitsp) is assigned to the current connection-individual time value (tx) for a third or fourth list parameter value (2 or 3)
- if a current connection-individual time value (tx) is present which is greater than the second temporal, buffered change information (t2x), the currently allowed cell rate (ACRx) is assigned the value of the second currently buffered transmission rate (DER2x) and the list parameter (Listparx) is assigned the first list parameter value (0),
- else, if a current connection-individual time value (tx) is present which is greater than the first temporal buffered change information (t1x), the allowed cell rate (ACRx) is assigned the value of the first current buffered cell rate (DER1x), the first current buffered cell rate (DER1x) is assigned the value of the second current buffered cell rate (DER2x) and the first temporal change information (t1x) is assigned the value of the second temporal change information (t2x) and the list parameter (Listparx) is assigned the second list parameter value (1),
that for a second list parameter value (1)
- if a current connection-individual time value (tx) is present which is greater than the first temporal buffered change information (t1x), the current allowed cell rate (ACRx) is assigned the value of the first current buffered cell rate (DER1x) and the list parameter (Listparx) is assigned the first list parameter value (0), and that for a first list parameter value (0)
- no updating of the temporal buffered change information (t1x, t2x), of the current allowed cell rate (ACRx) and of the list parameter (Listparx) is performed.

6. Method in accordance with one of the claims 1 to 5,
**characterised in that**,
an explicit cell rate (ECRx) is read from a resource management cell (RM (UER2, ECRx)) arriving in the second direction of transmission (UER2) and is buffered in the ATM communication device (ATM-KE), with the explicit cell rate (ECRx) representing the current cell rate possible in a further ATM communication device (ATM-KE) in the first direction of transmission (UER1) and being entered by the further ATM communication device (ATM-KE) along with the current possible transmission capacity into the resource management cell (RM (UER2, ECRx)).

7. Method in accordance with one of the claims 1 to 8,
**characterised in that**,
the two delay times (τ1x, τ2x) able to be predetermined on a connection-individual basis are shown by a first delay time (τ1x) representing a cell rate increase and by a second delay time (τ2x) representing a cell rate decrease, with the first delay time (τ1x) being smaller than the second delay time (τ2x).

8. Method in accordance with one of the claims 3 to 7,
**characterised in that**,
when a virtual connection (Vx) is established, the current allowed cell rate (ACRx) and the second current buffered cell rate (DER2x) are initialized with the value of an initial cell rate (ICRx) of ATM cells,
and that the list parameter (Listparx) is assigned the first list parameter value (0) and the connection-individual calendar information (Verb_Kal_Bitx) is initialised with the calendar information (Kal_Bit).

9. Method in accordance with one of the claims 6 to 8,
**characterised in that**,
the second current buffered cell rate (DER2x) is always allocated the value of the last explicit cell rate ECR (ECRx) read.

10. Method according to one of the claims 2 to 9,
**characterised in that**,
a minimum cell rate (MCRx) and a peak cell rate (PCRx) of an ATM cell are defined on a connection-individual basis for a virtual connection (Vx), with, on arrival of a resource management cell (RM (UER2, ECRx)) with an explicit cell rate ECR (ECRx) higher than the peak cell rate (PCRx) the explicit cell rate ECR (ECRx) is allocated the value of the peak cell rate (PCRx) and
on arrival of a resource management cell (RM (UER2, ECRx)) with an explicit cell rate ECR (ECRx) smaller than the minimum cell rate (MCRx) the explicit cell rate ECR (ECRx) is allocated the value of the minimum cell rate (MCRx).

11. Method in accordance with one of the claims s 6 to 10,
**characterised in that**,
a Rate Scheduling Routine (RS-R)
- if an explicit cell rate (ECRx) buffered in the ATM communication device (ATM-KE) is present which differs by comparison with the second current buffered cell rate (DER2x),which was read from a Resource Management cell (RM (UER2, ECRx)) created from one of the message sources
- or if a value is present which by comparison with the value of the second current buffered cell rate (DER2x) is smaller than an explicit cell rate (ECRx) buffered in the ATM communication device (ATM-KE), which was read from the resource management cell (RM (UER2, ECRx)) inserted by a further ATM communication device (ATM-KE) into the second cell stream (ZS (UER2)) in the second direction of transmission (UER2)
is executed.

12. Method in accordance with claim 11,
**characterised in that**
the Rate Scheduling Routine (RS-R) is embodied as follows:
if Listpar # 0
then if t1 ≥ t + τ₂
then if ECR ≥ DER1
then DER1 = ECR
if ECR > ACR
then t1 = t + τ₂
Listpar = 1
else if ECR < DER2
then t2 = t + τ₂
Listpar = 2
else if ((Listpar = 1) or (Listpar = 2))
then if ECR ≥ DER1
then t2 = t + τ₂
Listpar = 3
else if ECR < DER2
then t2 = t + τ₁
Listpar = 2
else if ECR < DER2
then DER1 = DER2
t2 = t + τ₁
Listpar = 2
else if ECR > ACR
then t1 = t + τ₂
else t1 = t + τ₁
DER1 = ECR
Listpar = 1,
with the abbreviations being as follows
t The current connection-individual time value,
t1 The first temporal change information,
t2 The second temporal change information,
τ1 the first delay time,
τ2 The second delay time,
ACR The allowed cell rate,
DER1 The first buffered cell rate,
DER2 The second buffered cell rate,
ECR The explicit cell rate,
Listpar The list parameter

13. Method in accordance with claim 5,
**characterised in that**
for different values of the calendar information (Kal_Bit) and the connection-individual calendar information (Verb_Kal_Bitx) a refresh routine (RF-R) is executed as follows:
if t1 ≥ time
then t1 = t1 - Zeitsp
else t1 = 0
if t2 > Zeitsp
then t2 = t2 - Zeitsp
else t2 = 0
invert Verb_Kal_Bit,
with the abbreviations being as follows
t1 The first temporal change information,
t2 The second temporal change information,
Verb_Kal_Bit The connection-individual calendar information
Zeitsp The predetermined period of time

14. Method in accordance with claim 1, 5, 8 and 13
**characterised in that**
the calendar information (Kal_Bit) and the connection-individual calendar information (Verb_Kal_Bitx) are each formed by 1-bit information.

## Revendications

1. Procédé pour la détermination spécifique à la communication du débit de transmission (ACRx) actuellement admissible de cellules ATM de communications (Vx) virtuelles avec des débits de transmission variables à l'aide d'informations de modification dans le temps (t1x, t2x) attribuées à des variations de débit de transmission à l'intérieur d'un dispositif de communication ATM (ATM-KE),
**caractérisé en ce que**
- dans lequel aucun débit de transmission ou au moins un débit de transmission (DER1x, DER2x) déterminé de façon spécifique à la communication de cellules ATM et aucune ou au moins une information de modification dans le temps (t1x, t2x) spécifique sont stockés provisoirement dans une unité de stockage (ROM),
- dans lequel le calcul des informations de modification dans le temps (t1x, t2x) de modification de débit de transmission s'effectue à l'aide de deux temporisations (τ1x, τ2x) prédéfinissables de façon spécifique à la communication par une routine de traitement de débit de transmission (RS-R),
- dans lequel, par une routine d'actualisation (RF-F) et après le dépassement d'un laps de temps (Zeitsp) prédéfini, les informations de modification dans le temps (t1x, t2x) sont actualisées à l'aide d'une valeur de temps actuelle (at), d'une information de calendrier (Kal_Bit) et d'une information de calendrier spécifique à la communication (Verb_Kal_Bitx),
- dans lequel le nombre des débits de transmission (DER1x,/DER2x) actuellement stockés provisoirement et leur rapport de grandeur les uns par rapport aux autres sont affichés à l'aide d'un paramètre de liste (Listparx),
- et dans lequel la détermination du débit de transmission (ACRx) actuellement admissible et une actualisation du paramètre de liste (Listparx) s'effectuent à l'aide des informations de modification dans le temps (t1x, t2x)et de la valeur de paramètre de liste.

2. Procédé selon la revendication 1,
**caractérisé en ce que**
la détermination spécifique à la communication du débit de transmission (ACRx) actuellement admissible de cellules ATM est effectuée pour une communication virtuelle (Vx) soit lors de l'arrivée d'une cellule ATM (ABR(UER1)) dans une première direction de transmission (UER1) soit lors de l'arrivée d'une cellule de gestion de ressource (RM(UER1, ECR)) dans une seconde direction de transmission (UER2) orientée dans le sens opposé par rapport à la première direction de transmission ou après un dépassement du laps de temps prédéfini (Zeitsp) dans le dispositif de communication ATM (ATM-KE).

3. Procédé selon les revendications 1 à 2,
**caractérisé**
**en ce que** dans le cas d'une première valeur de paramètre de liste (0), aucun débit de transmission (ACRx) actuel de cellules ATM n'est stocké provisoirement,
**en ce que**, dans le cas d'une seconde valeur de paramètre de liste (1), un premier débit de transmission (DER1x) actuel de cellules ATM est stocké provisoirement,
**en ce que**, dans une troisième valeur de paramètre de liste (2), deux débits de transmission (DER1x, DER2x) actuels sont stockés provisoirement et le premier débit de transmission (DER1x) est supérieur au second débit de transmission (DER2x),
et **en ce que**, dans le cas d'une quatrième valeur de paramètre de liste (3), deux débits de transmission (DER1x, DER2x) actuels sont stockés provisoirement et le premier débit de transmission (DER1x) est inférieur au second débit de transmission (DER2x).

4. Procédé selon la revendication 3,
**caractérisé en ce que**
une première information de modification (DER1x) dans le temps est attribuée à un premier débit de transmission (DER1x) stocké provisoirement et
**en ce qu'**une seconde information de modification dans le temps (t2x) est attribuée à un second débit de transmission (DER2x) actuellement stocké provisoirement.

5. Procédé selon l'une quelconque des revendications 3 et 4,
**caractérisé en ce que**
dans le cas d'une concordance de l'information de calendrier (Kal_Bit) avec l'information de calendrier (Verb_Kal_Bitx) spécifique à la communication, une valeur de temps (tx) actuelle et spécifique à la communication est attribuée à la valeur de temps (at) actuelle, autrement l'ensemble de la valeur de temps actuelle (at) et du laps de temps prédéfini (Zeitsp) est attribué à la valeur de temps (tx) actuelle et spécifique à la communication,
**en ce que**, dans le cas d'une troisième ou d'une quatrième valeur de paramètre de liste (2 ou 3),
- en cas de présence d'une valeur de temps (tx) actuelle et spécifique à la communication, qui est supérieure à l'information de modification (t2x) dans le temps stockée provisoirement, la valeur du second débit de transmission (DER2x) actuellement stocké provisoirement est attribuée au débit de transmission (ACRx) actuellement admissible et la première valeur de paramètre de liste (0) est attribuée au paramètre de liste (Listparx),
- autrement dans le cas de présence d'une valeur de temps (tx) actuelle et spécifique à la communication, qui est supérieure à la première information de modification (t1x) dans le temps stockée provisoirement, la valeur du débit de transmission (DER1x) actuellement stocké provisoirement est attribuée au débit de transmission (ACRx) actuellement admissible, la valeur du second débit de transmission (DER2x) actuellement stocké provisoirement au premier débit de transmission (DER1x) actuellement stocké provisoirement et la valeur de la seconde information de modification dans le temps (t2x) à la première information de modification dans le temps (t1x) et la seconde valeur de paramètre de liste (1) au paramètre de liste (Listparx),
**en ce que**, dans le cas d'une seconde valeur de paramètre de liste (1),
- en cas de présence d'une valeur de temps (tx) actuelle et spécifique à la communication, qui est supérieure à la première information de modification (t1x) dans le temps stockée provisoirement, la valeur du premier débit de transmission (DER1x) actuellement stocké provisoirement est attribuée au débit de transmission (ACRx) actuellement admissible et la première valeur de paramètre de liste (0) au paramètre de liste (Listparx), et
- **en ce que**, dans le cas d'une première valeur de paramètre de liste (0), aucune actualisation des informations de modification (t1x, t2x) dans le temps stockées provisoirement, du débit de transmission (ACRx) actuellement admissible et du paramètre de liste (Listparx) n'est effectuée.

6. Procédé selon l'une quelconque des revendications 1 à 5,
**caractérisé en ce que**
à partir d'une cellule de gestion de ressource (RM (UER2, ECRx)) arrivant et transmise dans la seconde direction de transmission (UER2), un débit de transmission (ERCx) explicite est lu et stocké provisoirement dans le dispositif de communication ATM (ATM-KE), le débit de transmission (ECRx) explicite représentant le débit de transmission actuellement possible et pouvant être transmis dans un autre dispositif de communication ATM (ATM-KE) dans la première direction de transmission (UER1) et étant transmis par l'autre dispositif de communication ATM (ATM-KE) avec la capacité de transmission actuellement possible dans la cellule de gestion de ressource (RM (UER2, ECRx)).

7. Procédé selon l'une quelconque des revendications 1 à 8,
**caractérisé en ce que**
les deux temporisations (τ1x, τ2x) prédéfinissables de façon spécifique par communication sont représentées par une première temporisation (τ1x) représentant une élévation du débit de transmission et par une seconde temporisation (τ2x) représentant un abaissement du débit de transmission, la première temporisation (τ1x) étant inférieure à la seconde temporisation (τ2x).

8. Procédé selon l'une quelconque des revendications 3 à 7,
**caractérisé en ce que**
lors de l'établissement d'une communication virtuelle (Vx), le débit de transmission (ACRx) actuellement admissible et le second débit de transmission (DER2x) actuellement stocké provisoirement sont initialisés avec la valeur d'un débit de transmission initial (ICRx) de cellules ATM,
et **en ce que** la première valeur de paramètre de liste (0) est attribuée au paramètre de liste (Listparx) et l'information de calendrier spécifique à la communication (Verb_Kal_Bitx) est initialisée avec l'information de calendrier.

9. Procédé selon l'une quelconque des revendications 6 à 8,
**caractérisé en ce que**
la valeur du dernier débit de transmission (ECRx) lu et explicite est toujours attribuée au second débit de transmission (DER2x) actuellement stocké provisoirement.

10. Procédé selon l'une quelconque des revendications 2 à 9,
**caractérisé en ce que**
un débit de transmission minimum (MCRx) et un débit de transmission maximum (PCRx) de cellules ATM sont définis de façon spécifique par communication pour une communication virtuelle (Vx), lors de l'arrivée d'une cellule de gestion de ressource (RM (UER2, ECRx)) avec un débit de transmission (ECRx) explicite supérieur au débit de transmission maximum (PCRx), la valeur du débit de transmission maximum (PCRx) étant attribuée au débit de transmission explicite (ECRx) et,
lors de l'arrivée d'une cellule de gestion de ressource (RM (UER2, ECRx)) avec un débit de transmission explicite (ECRx) inférieur au débit de transmission minimum (MCRx), la valeur du débit de transmission minimum (MCRx) étant attribuée au débit de transmission explicite (ECRx).

11. Procédé selon l'une quelconque des revendications 6 à 10,
**caractérisé en ce que**
une routine de traitement de débit de transmission (RS-R) est exécutée
- en cas de présence d'un débit de transmission (ECRx) explicite, stocké provisoirement dans le dispositif de communication ATM (ATM-KE) et différent par rapport au second débit de transmission (DER2x) actuellement stocké provisoirement, lequel débit a été lu à partir d'une cellule de gestion de ressource (RM (UER2, ECRx)) générée par la source de messages
- ou bien en présence d'une valeur inférieure par rapport à la valeur du second débit de transmission (DER2x) actuellement stocké provisoirement en tant que valeur du débit de transmission (ECRx) explicite, stockée provisoirement dans le dispositif de communication ATM (ATM-KE), lequel débit a été lu à partir d'une cellule de gestion de ressource (RM(UER2, ECRx) insérée par un autre dispositif de communication ATM (ATM-KE) dans une seconde direction de transmission (UER2) dans le second flux de cellule (ZS (UER2)).

12. Procédé selon la revendication 11,
**caractérisé en ce que**
la routine de traitement de débit de transmission (RS-R) est conçue de la façon suivante :
si Listpar ≠ 0
alors si t1 ≥ t + τ₂
alors si ECR1 ≥ DER
alors DER1 = ECR
si ECR ≥ ACR
alors t1 = t + τ₂
Listpar = 1
autrement si ECR < DER2
alors t2 = t + τ1
Listpar = 2
autrement si ((Listpar = 1) ou (Listpar = 2))
alors si ECR ≥ DER1
alors t2 = t + τ2
Listpar = 3
autrement si ECR < DER2
alors t2 = t + τ1
Listpar = 2
autrement si ECR < DER2
alors DER1 = DER2
t2 = t + τ1
Listpar = 2
autrement si ECR > ACR
alors t1 = t + τ2
autrement t1 = t + τ1
DER1 = ECR
Listpar = 1,
où
t représente la valeur de temps actuelle et spécifique à la communication,
t1 les premières informations de modification dans le temps,
t2 les secondes informations de modification dans le temps
τ1 la première temporisation,
τ2 la seconde temporisation,
ACR le débit de transmission actuellement admissible,
DER1 le premier débit de transmission stocké provisoirement,
DER2 le second débit de transmission stocké provisoirement,
ECR le débit de transmission explicite,
Listpar le paramètre de liste.

13. Procédé selon la revendication 5,
**caractérisé en ce que**
dans le cas des valeurs différentes de l'information de calendrier (Kal_Bit) et de l'information de calendrier (Verb_Kal_Bitx) spécifique à la communication, on exécute en supplément une routine d'actualisation (RF-R) de la façon suivante :
si t1 ≥ Zeitsp
alors t1 = t1 - Zeitsp
autrement t1 = 0
si t2 ≥ Zeitsp
alors t2 = t2 - Zeitsp
autrement t2 = 0
inverser Verb_Kal_Bit,
où
t1 représente les premières informations de modification dans le temps,
t2 les secondes informations de modification dans le temps,
Verb_Kal_Bit les informations de calendrier spécifiques à la communication
Zeitsp le laps de temps prédéfini.

14. Procédé selon les revendications 1, 5, 8 et 13,
**caractérisé en ce que**
l'information de calendrier (Kal_Bit) et l'information de calendrier spécifique à la communication (Verb_Kal_Bitx) sont formées respectivement par une information de 1-bit.
